# EUROPEAN PATENT APPLICATION

(11) **EP 2 597 601 A1**
(43) Date of publication of application: **29.05.2013**
(21) Application number: 11306553.6
(22) Date of filing: 24.11.2011
(51) Int. Cl.: G06Q 10/06, G06F 11/34, H04L 12/24

(54) **Method and system for functional monitoring in multi-server reservation system**

(71) Applicant: Amadeus S.A.S., 06410 Biot (FR)
(72) Inventor: Fontenier, Maxime, 06560 Valbonne (FR)
(74) Representative: Anderson, Angela Mary

(57) **Abstract**

The method and system according to a preferred embodiment of the present invention allows a functional monitoring of a reservation system. The method uses a specific architecture which reproduces the system of terminals to monitor. The architecture is made of gauges which are connected in a specific manner to take into account the rules already set between the terminals. In addition, the architecture is produced in order to monitor a specific part of the system of terminals as requested by the user. New indicators are defined with specific rules and calculated with corresponding formulae based on above mentioned existing indicators. For example, a rule can be a request for receiving an indication of when a specific level of occupied seats in a plane is reached in order to allow the flight to occur. The answer to the request refers to a specific calculation based on current data coming from a real situation of checking the number of occupied seat on a regular basis. A resulting graph of the monitoring method can be displayed to visualize the evolution of the monitoring based on the new indicators and on up-to-date data.

## Description

### Field of the invention

The present invention relates to the field of travel reservation systems, more particularly to a method and system for monitoring system performances in multi-server reservation system.

### Background of the invention

Modern travel companies (e.g. airlines) usually employ sophisticated applications for handling reservation requests by customers. It is more and more frequent the case where more than one architecture is used throughout the company system. In such cases compatibility and synchronization issues should be taken into account when designing and planning the reservation system. An example is when part of the reservation management is performed on Internet based applications or communication infrastructures. Another example is when a system (not necessarily a reservation system) must be migrated from a legacy mainframe system (e.g. TPF) to a new system (e.g. an open system).

One of the issues to be considered is the complexity of monitoring activities because of functional distribution. A booking service is implemented among several applications. An application is focused on a particular use case; for instance check flight availability or pricing. An application depends on several resources such as databases, machines or network links.

It is known in the Information Technology field to implement monitoring systems which monitor system performances. As an example, US2002/0156884 discloses a method and system for providing performance analysis of a group of computers arranged with several nodes to determine any possible improvement in the performance of the computers. The analysis can be displayed on a graph to monitor the performance of the group of computers. The method and system relates to a monitoring of hardware components such as the monitoring of memory consumption, disk consumption and CPU consumption. Another example comes from US6,055,492 which discloses a method and system for providing improved monitoring of performance of a system. The method discloses monitoring performance of a system by using a specific tree structure to improve the response to performance queries and to monitor long running programs. The method and system relate to monitoring of a hardware component such as monitoring a memory allocation.

However known prior art systems are of little help when the object of the monitoring action is a service such as flight management, level of occupied seats, being performed through a complex multi-server architecture where the correctness of a node might be affected by the results of other nodes in the structure and the evaluation on correctness is not a simple Boolean value. In the present document with service we mean operations performed by data processing system (e.g. distributed data processing systems) responsive to request being received by a user or a machine, through dedicated applications, where applications can include software and/or hardware components. A complex multi-server architecture (e.g. a client/server architecture), such as a travel related reservation system, can include several functional components, e.g. input terminals, client systems allowing access to users and connected systems, server for performing services or part of services. The services are normally divided into a plurality of stages, which might need to be monitored to control the correct functioning of the whole service.
A service is a functionality that is implemented as a transactional conversation between a client and the reservation system.
A service is split into several stages.
An application hosts the functional software that implements a stage of service. Application is deployed on machines.
As a result a service depends on several software and several machines.

### Object of the invention

An object of the present invention is to alleviate at least some of the problems associated with the prior art systems.

According to one aspect of the present invention there is provided a method for monitoring, with a controller computer, performances of a service performed by a distributed data processing system including a plurality of functional components, wherein the service includes a plurality of computer implemented activity stages, each stage being associated to at least one health parameter indicative of the service performance, the at least one parameter having at least one predetermined threshold value representing the successfulness of the associated service, the plurality of stages being represented by the controller computer with a tree data structure including nodes interconnected one each other, each node being associated to one of the plurality of activity stages, wherein each of the peripheral nodes is associated to at least one of the plurality of functional components and wherein non-peripheral nodes are receiving input from at least another node, the method including the steps of: each peripheral node monitoring the at least one associated functional component; responsive to an input being received from the associated functional component, a peripheral node modifying the value of the associated health parameter and providing input to at least one of the non-peripheral nodes; responsive to an input received from another node a non-peripheral node modifying the value of the associated health parameter and providing input to at least another non-peripheral node or to the tree root; responsive to an health parameter reaching the at least one predetermined threshold value, the controller computer issuing an alert.

The method according to a preferred embodiment of the present invention allows handling very different cases; also it is possible to separate monitoring from alert management and mix low level and high level entities. Cascade health interpretation allows refining data from bottom to top levels. Low level data can be analysed to determine a health of those hardware level. In an embodiment of the present invention, this information is cascaded in higher gauges that represent services or applications. Therefore High level data can be analysed to determine a health of functional components and service at higher level. According to a second aspect of the present invention there is provided a system comprising one or more components adapted to perform the method described above.

According to a further embodiment of the present invention there is provided a computer program comprising instructions for carrying out the method described above when said computer program is executed on a computer system.

### Brief description of drawings

Reference will now be made, by way of example, to the accompanying drawings, in which:
Figure 1 is a diagram of the monitoring system in accordance with one embodiment of the present invention;
Figures 2 and 3 schematically show the Flight Management use case example using a monitoring method according to a preferred embodiment of the present invention;
Figure 4 represents a second example using a monitoring method according to a preferred embodiment of the present invention;
Figure 5 represents a further example using a monitoring method according to a preferred embodiment of the present invention;
Figure 6 is a diagram of a general computer system adapted to support the method of a preferred embodiment of the present invention;
Figures 7 is a flow chart of the method steps of a process, in accordance with one embodiment of the present invention.

### Detailed description of the embodiments

The example on which the present description is based is a reservation system distributed among mainframe, e.g. TPF or MVS systems of International Business Corporation and open platform, e.g. UNIX or Linux systems. The reservation system could be implemented e.g. on an Amadeus infrastructure. However the present invention is applicable to any implementation of a reservation system which works across multiple servers with different platforms. The reservation system is implemented as an Open Back-end system which can process a huge volume of transactions from many terminals located at different places in the world. The Open back-end system uses several nodes to process all the transactions. The Open back-end system also uses indicators to determine the correct processing of each node. Each indicator refers to specific checking functions of hardware components: e.g. checking memory consumption, disk consumption and CPU consumption. A global indicator gathers all the indicators to give a global checking indicator of the processing through the nodes. The global indicator provides failure detection of hardware components. The method according to a preferred embodiment of the present invention is based on new indicators. The method uses a specific architecture which reproduces the system of terminals to monitor. The architecture is made of gauges which are connected in a specific manner to take into account the rules already set between the terminals. In addition, the architecture is produced in order to monitor a specific part of the system of terminals as requested by the user. New indicators are defined with specific rules and calculated with corresponding formulae based on above mentioned existing indicators. For example, a rule can be a request for receiving an indication of when a specific level of occupied seats in a plane is reached in order to allow the flight to occur. The answer to the request refers to a specific calculation based on current data coming from a real situation of checking the number of occupied seat on a regular basis. A resulting graph of the monitoring method can be displayed to visualize the evolution of the monitoring based on the new indicators and on up-to-date data.

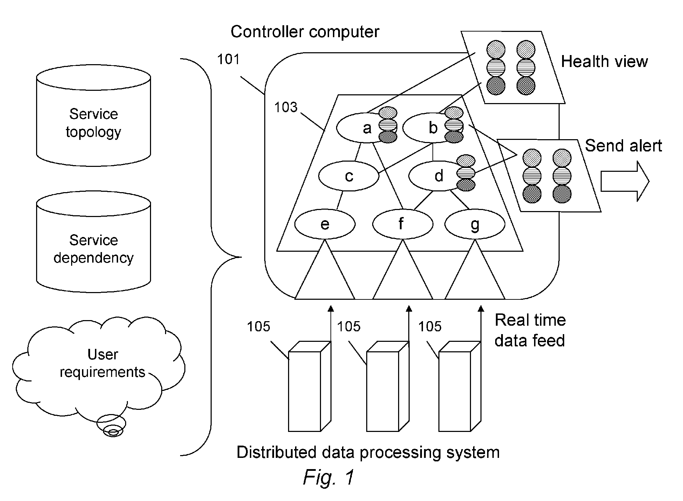

Figure 1 represents an example of a possible implementation of the system and method according to a preferred embodiment of the present invention. A controller computer 101 maintains a tree representation of a graph 103 representing the activity stages of a service(s) performed by a distributed data processing system. The distributed data processing system includes e.g. three data sources 105 (e.g. check-in terminals, boarding gate terminals, CPUs, storage servers) which provide input to the tree data structure, each one being associated to at least one peripheral node of the tree data structure. The graph 103 has been previously built taking into account the Service Topology, the Service Dependencies and the User Requirements.

One of the key characteristics of the gauges used in the method according to a preferred embodiment of the present invention is the fact that the indicators can provide a response which is not limited to a binary value, but it can include a plurality of output values (in the present example, based on colours, three possible values are available, corresponding to red, amber and green).

In a preferred embodiment of the present invention, all indicators are included in a single data structure. The structure itself maintains a static hierarchy between indicators.
The data structure of the present example is a graph, which nodes are indicators (also called gauges).
The gauge node will have a health that is changed either by real time value or other gauge health.
The basic element is the gauge. Its primary attributes are an integer value and a cap. From the comparison of current value and cap we can determine dynamically the gauge health.
The first rank gauges are influenced by hardware indicators: like memory consumption, disk usage or trap frequency.
Gauge from higher level refined the below information: they represent services, applications, client service level.

The gauge is taken as the node type of our graph. As a result we can represent relations between gauges with graph edges. This is useful for second rank gauges and above. Indeed gauges can read and refine others gauges health to compute their own health. The value change that comes in real time from first rank gauge will be propagated in the graph. The information will impact every level of interpretation as it goes up in the graph.
The graph structure is a prerequisite of the system. It can be built offline. It represents a full system and can monitor both low level indicators and high level use cases for clients. This can be done by the system administrator and customized by the client according to own requirements and system topology. The term topology is to be interpreted in a broad sense, it can include hardware topology (e.g. "Machine009" health depends on CPU level and its free memory), but also services distribution over machines and also services inter dependencies. This will be illustrated in a service example later on.

The graph itself is not functional-specific. Here are a couple of examples showing how graph can depict different use cases.

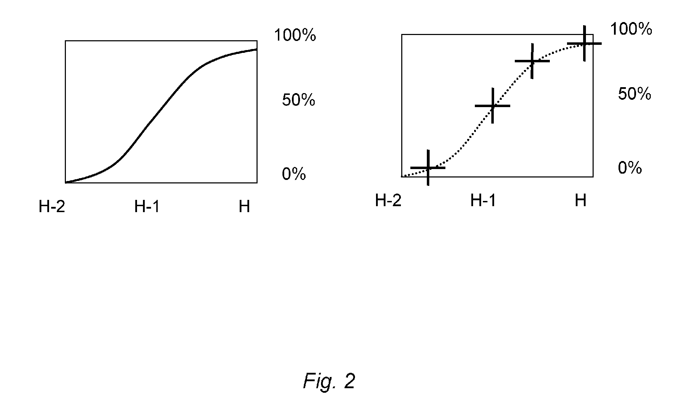

One example, as represented in Figures 2 is that of Flight management. This use case is centred on customer management process in airport. Airlines have a minimum boarding ratio over time before boarding is closed. This is represented by several key points, represented in the table below.

| **Minimum boarded percentage** | **Time before take-off** |
|---|---|
| 10 | 2 hours |
| 50 | 1 hour |
| 90 | 30 minute |

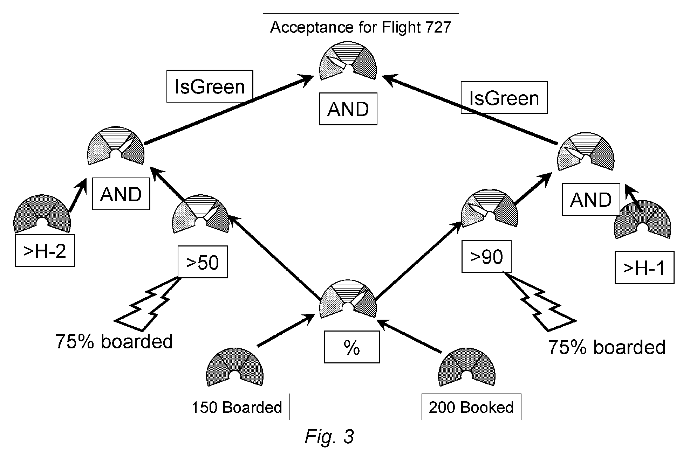

This behaviour can be implemented with a graph as represented in Figure 3 to ensure that airlines has the minimum boarding passengers at any time. As a result a gauge (graph node) will pass red if boarding pass below limit.
This can be implemented for every airport gate. As a result we can determine e.g. global Sydney airport status from its hubs, for all gates.

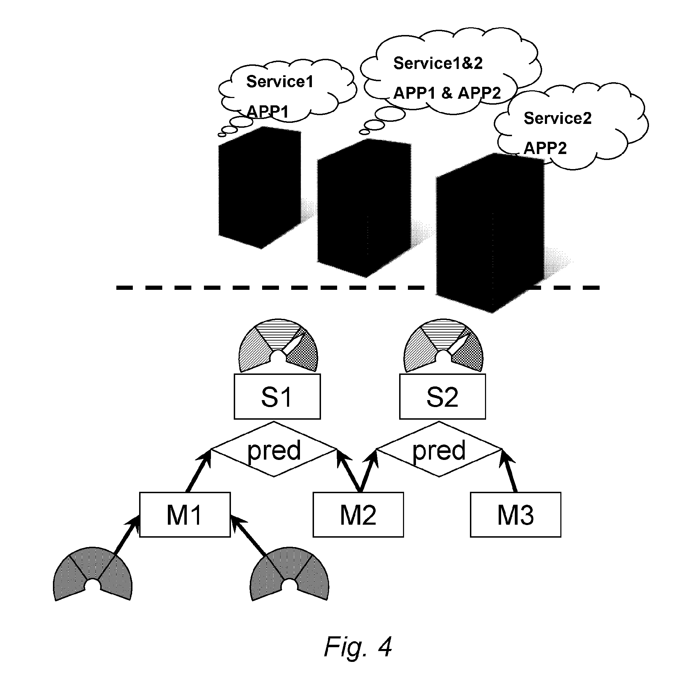

Figure 4 represents another example using a monitoring method according to a preferred embodiment of the present invention. Operations of the system is based on two Applications (APP1, providing Service1 and APP2, providing Service2) supported by three physical machines (M1, M2 and M3). They can run applications distributed on these machines. M1 hosts APP1, M2 hosts both APP1 and APP2, while M3 hosts APP2. This relation is stored in a "machine topology" database. With the so-called Service Virtualization, services can run on several machines at a time. Of course we can also have several services running on the same machine concurrently. The case represent in Figure 4 is an example of such potential distribution. Services deployment is maintained up to date by Operations. This is the "machine topology" database. As an example if M1 and M2 are down, our system must predict that APP1 is down and APP2 is impacted.

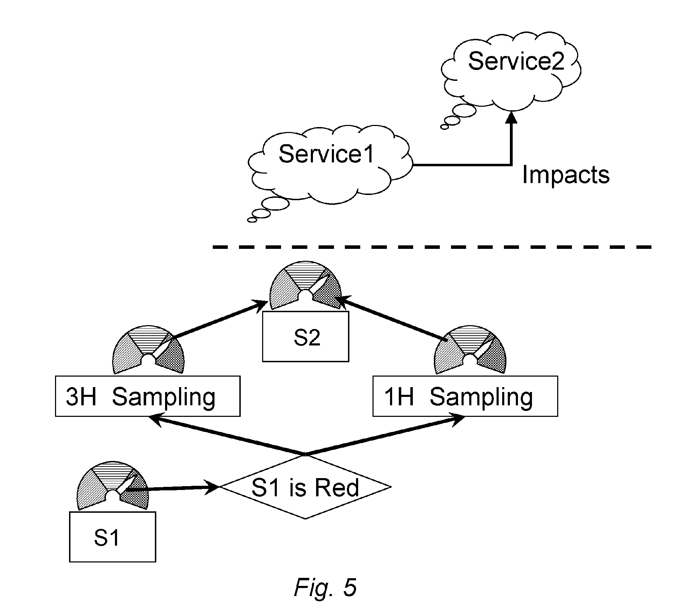

Figure 5 represents an additional constraint, according to which Service2 (S2) requires Service1 (S1) to be up and running. This dependency relation is stored in a service topology data base. A customer request use case is realised among several services. They can be cascaded, meaning that they must be done in sequence order. If one is failing the subsequent services are impacted or unable to process. The case represented in Figure 5 shows that S1 is impacted if S2 is down for more than one hour. S1 is down if S2 is down for more than three hours.
The critical component is represented by the gauge when the following two predicates are met:
- redPredicate: S2 is 3 hours down
- orangePredicate: S2 is 1 hour down
The service topology database is either declared during specification or created thanks to traffic observation on 1 transaction.

Another example is service management around passenger record. Each activity of passenger record is stored into database. The service is realized by a PNR Store entity. With PNR Store it is meant the process of copy and protection of traveller and itinerary data. Each activity must be broadcasted thanks to PNR Publication (which is meant to be the process of distributing information of PNR modification to subscribers).
PNR Publication depends on PNR Store. This will be handled in the monitoring graph so that every problem occurring in PNR Store will degrade PNR Publication.
Here below some details of a specific implementation of the method and system of the present invention are provided for example purposes only.

According to a preferred embodiment of the present invention, the data structure has been realised with C++ language and several third party libraries.

### Graph

Boost graph library has been used to handle the graph structure. This popular library offers:
- node path management;
- propagation algorithm; and
- node property to attach any data to node.

### Node family

The node classes are one of the key features of the method and system according to a preferred embodiment of the present invention. They are presented from basic class to the most specific ones. Each node class implements a basic monitoring type, e.g. watch an event frequency or watch for an absolute event occurrence.

### Threshold gauge

The basic gauge contains an integer value that is updated dynamically by events or other gauges. Events are SNMP traps coming from application or machines.

The gauge has static health cap that indicates the gauge colour from its value. The inner value causes health evaluation each time it is updated.
The gauge has 3 different colours depicting its health.

| **Attributes** | **Gauge colour above** | **Gauge colour below** |
|---|---|---|
| Red upper limit | Red | Orange |
| Orange upper limit | Orange | Green |
| Orange lower limit | Green | Orange |
| Red lower limit | Orange | Red |

This basic gauge has also a latency property. This prevents the gauge to actually blink due to irregular real time value.
This ensures the monitoring engine to be consistent over time.

This gauge is commonly used for operational monitoring: disk usage or edifact traffic.

### Frequency gauge

Frequency gauge inherits from Threshold gauge and focus on event occurrence only not its integer value.

This is convenient when we aim at monitoring warnings. A warning multiplicity within a time frame could be upgraded as a proper error.

*Sample:* Gauge passes red if back-end reports more than 30 database access errors within 1 minute.

### Functional gauge

Functional gauge inherits from Threshold gauge
The monitoring needs also data computation or calculation.
This is achieved by the functional gauge. It allows calculation between gauge inner values. This new value becomes the value of the functional gauge itself.

For example, let's suppose we wanted to get the boarding percentage for flight AF007. G1 currently reacts over the current boarded passengers. G2 just stores the total booking for the flight,
A third gauge is implemented as a functional gauge to compute the percentage between G1 and G2.

### Predicate Gauge

This gauge is more complex because it deals with predicate. Predicate are properties over object that evaluates to Boolean.
Due to the 3-value colour we had to give 3 attributes to this gauge: redPredicate, orangePredicate and greenPredicate,

If set those predicate are evaluated in order. A true evaluation will show the matching error.
If all is evaluated to false, the gauge reports the default colour.

The default colour is determined by the types of predicates that are given when gauge is constructed.
For instance a greenPredicate implementation will result a red default colour.

| **redPredicate** | **orangePredicate** | **greenPredicate** | **Default colour** |
|---|---|---|---|
| implemented | | | Green |
| | implemented | | Green |
| | | implemented | Red |
| implemented | implemented | | Green |
| | implemented | implemented | Red |
| implemented | | implemented | Orange |

Example: Application APP is up, if all APP machines are in good health. All machines are already managed by a gauge: G1, G2 ... GN.
To ensure APP is up we creates a Predicate Gauge with the following green predicate.

isGreen(G1) AND isGreen(G2) AND ... isGreen(GN)

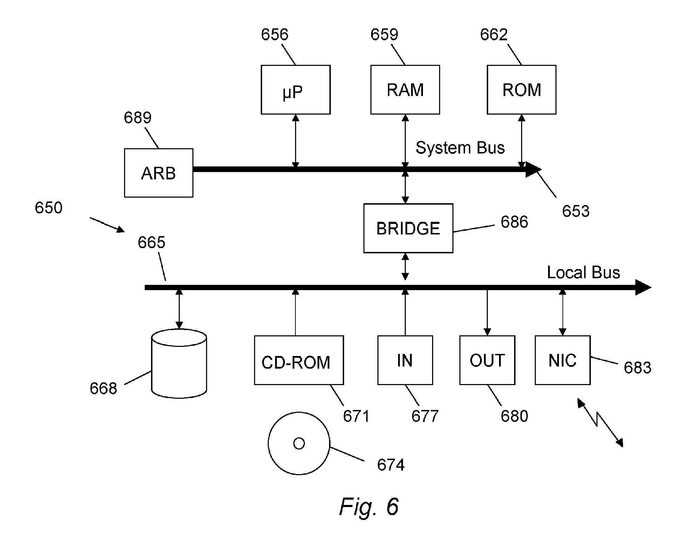

With reference to Figure 6 a generic computer of the system (e.g. any computer, Reservation server, TPF mainframe, Open System server, data base management subsystem, router, network server) is denoted with 650. The computer 650 is formed by several units that are connected in parallel to a system bus 653. In detail, one or more microprocessors 656 control operation of the computer 650; a RAM 659 is directly used as a working memory by the microprocessors 656, and a ROM 662 stores basic code for a bootstrap of the computer 650. Peripheral units are clustered around a local bus 665 (by means of respective interfaces). Particularly, a mass memory consists of a hard-disk 668 and a drive 671 for reading CD-ROMs 674. Moreover, the computer 650 includes input devices 677 (for example, a keyboard and a mouse), and output devices 680 (for example, a monitor and a printer). A Network Interface Card 683 is used to connect the computer 650 to the network. A bridge unit 686 interfaces the system bus 653 with the local bus 665. Each microprocessor 656 and the bridge unit 686 can operate as master agents requesting an access to the system bus 653 for transmitting information. An arbiter 689 manages the granting of the access with mutual exclusion to the system bus 653. Similar considerations apply if the system has a different topology, or it is based on other networks. Alternatively, the computers have a different structure, include equivalent units, or consist of other data processing entities (such as PDAs, mobile phones, and the like).

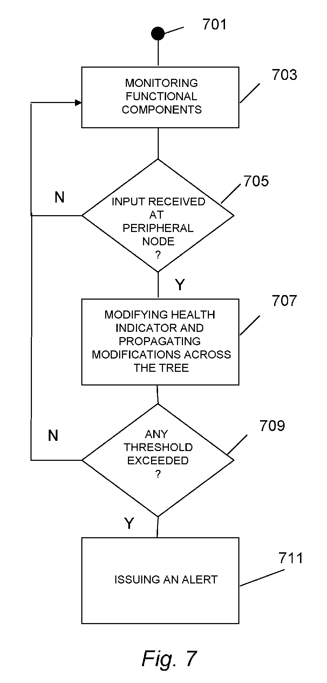

The method described above is also represented in the diagram shown in figure 7. The method realizes a monitoring method for monitoring performances of a service performed by a distributed data processing system including a plurality of functional components, wherein the service includes a plurality of computer implemented activity stages, each stage being associated to at least one health indicator (or parameter) indicative of the service performance, the at least one indicator having at least one predetermined threshold value representing the successfulness of the associated service, the plurality of stages being represented by a tree data structure including nodes interconnected one each other, each node being associated to one of the plurality of activity stages, wherein each of the peripheral nodes is associated to at least one of the plurality of functional components and wherein non-peripheral nodes are receiving input from at least another node. The method begins at black circle 701 and then goes to box 703 where the system monitors a plurality of associated functional components. Functional components normally depend on physical inputs and, when new inputs are received, associated values are modified accordingly. As an example, input values received from functional component can be:
- machine available memory;
- machine CPU consumption;
- number of errors logged into a backend;
- traffic per second received by a backend.
Computation into functional component could be e.g. percentage or average over period of time.
Each monitored functional component is associated to a peripheral node of the tree and the input received from the component can have an effect on the current status of the node. With peripheral node we mean those nodes of the tree receiving a direct input form the monitored distributed data processing system, while those nodes of the tree which receive input by another node (either peripheral or not) are referred to a s "non-peripheral" nodes. Therefore, in the tree structure representation, peripheral nodes are the nodes at the "periphery" of the tree, i.e. the nodes being exposed to external influence, while the non-peripheral nodes are receiving input only from other nodes of the tree structure. Peripheral node accepts direct input from monitored systems.
The other nodes accept data filtered by the peripheral nodes.
The control then goes to step 705 where, responsive to an input being received from the associated functional component, the peripheral node modifies the value of the associated health indicator: this can happen with several implementing specific rules as mentioned above. The modified value of the health indicator in a peripheral nodes trigger a chain of modifications along the three up to the tree root, i.e. the peripheral node communicates the modified value (and possibly the modified status) to at least one of the connected non-peripheral nodes. When receiving an input from another node each non-peripheral node modifies the value of the associated health indicator and, in turn, provides input to at least another non-peripheral node or to the tree root (see step 707). When the values of one of the health indicators reaches the at least one predetermined threshold value (step 709), the system issues an alert (step 711). Such alert can be embodied in several different implementing ways: it could be for example a warning message issued to the system administrator, a sound alarm, a command signal triggering an emergency procedure. In general the system is capable of detecting the occurrence of an anomaly and, with the logged transaction history collected by the system it is possible to identify the fault origin. When a fault, a malfunctioning or, more generally, a problem is detected according to the steps above, the system can decide to start a recovery action. Such recovery action (not represented in Figure 7) can range a wide variety of activities, from simple information to proper corrective actions: it can be e.g. a mere notification of the existence of the issue to an administrator or could include the invocation of an error tracking analyses from the high-level gauges down to the peripheral nodes. The information collected by the system can be used by the system itself or by the administrator to identify and correct the malfunctioning.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the disclosure may be incorporated in any other embodiment as a general matter of design choice.
Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A method for monitoring, with a controller computer, performances of a service performed by a distributed data processing system including a plurality of functional components, wherein the service includes a plurality of computer implemented activity stages, each stage being associated to at least one health parameter indicative of the service performance, the at least one parameter having at least one predetermined threshold value representing the successfulness of the associated service, the plurality of stages being represented by the controller computer with a tree data structure including nodes interconnected one each other, each node being associated to one of the plurality of activity stages, wherein each of the peripheral nodes is associated to at least one of the plurality of functional components and wherein non-peripheral nodes are receiving input from at least another node, the method including the steps of:
- each peripheral node monitoring the at least one associated functional component;
- responsive to an input being received from the associated functional component, a peripheral node modifying the value of the associated health parameter and providing input to at least one of the non-peripheral nodes;
- responsive to an input received from another node a non-peripheral node modifying the value of the associated health parameter and providing input to at least another non-peripheral node or to the tree root;
- responsive to a health parameter reaching the at least one predetermined threshold value, the controller computer issuing an alert.

2. The method of claim 1 wherein the at least one health parameter has a plurality of predetermined threshold values each predetermined threshold value representing a corresponding degree of successfulness of the associated service, wherein the controller computer performs a different actions according to the different threshold value being reached by the at least one health parameter.

3. The method of claim 2 wherein the at least one health parameter has a first and a second predetermined threshold values, the first threshold value indicating a first level of degradation of system performances and the second threshold value indicating a second level of degradation of system performances, wherein:
- responsive to at least one health parameter reaching a first threshold value, the controller computer issues an alert; and
- responsive to at least one health parameter reaching a second threshold value, the controller computer triggering a recovery action.

4. The method of claim 3 wherein the alert includes one of the following actions: issuing a warning message, producing a sound message, sending a message notifying an administrator a possible problem.

5. The method of claim 3 or 4 wherein the recovery action includes starting an error tracking analyses from the high-level gauges down to the peripheral nodes.

6. The method of any preceding claim wherein the input being received from the associated functional component is representative of one or more of the following values: machine available memory; machine CPU consumption; number of errors logged into a backend; traffic per second received by a backend.

7. The method of any preceding claim wherein the step of a peripheral node modifying the value of the associated health parameter and the step of a non-peripheral node modifying the value of the associated health parameter, include one of the following: calculating a percentage of the input received; calculating an average over period of time of input received.

8. A computer program comprising instructions for carrying out the steps of the method according to any preceding claim, when said computer program is executed on a computer.

9. A computer program product including computer readable means embodying the computer program of claim 8.

10. A reservation multi-server data processing system, including a monitoring tool for monitoring, with a controller computer, performances of a service performed by a distributed data processing system including a plurality of functional components, wherein the service includes a plurality of computer implemented activity stages, each stage being associated to at least one health parameter indicative of the service performance, the at least one parameter having at least one predetermined threshold value representing the successfulness of the associated service, the plurality of stages being represented by the controller computer with a tree data structure including nodes interconnected one each other, each node being associated to one of the plurality of activity stages, wherein each of the peripheral nodes is associated to at least one of the plurality of functional components and wherein non-peripheral nodes are receiving input from at least another node, wherein the system comprises one or more components adapted to perform the method of any claim 1 to 7.

11. A service deployed in a data processing system for implementing the method of any claim 1 to 7.
